# EUROPÄISCHE PATENTANMELDUNG

(11) **EP 2 200 118 A1**
(43) Veröffentlichungstag der Anmeldung: **23.06.2010**
(21) Anmeldenummer: 09014759.6
(22) Anmeldetag: 26.11.2009
(51) Int. Cl.: H01M 10/48, H01M 10/50, B60H 1/00

(54) **Vorrichtung zur Speicherung elektrischer Energie**

(30) Priorität: 15.12.2008 DE 102008062158
(71) Anmelder: Li-Tec Battery GmbH, 01917 Kamenz (DE)
(72) Erfinder: Gutsch, Andreas, Dr., 59348 Lüdinghausen (DE); Mikus, Holger, Dr., 01917 Kamenz (DE); Kaiser, Jörg, Dr.rer.nat., 01917 Kamenz (DE); Schneider, Martin, Dr., 02633 Göda (DE); Eichinger, Günter, Dr., 63674 Altenstadt (DE); Schäfer, Tim, 99762 Niedersachswerfen (DE)
(74) Vertreter: Wallinger, Michael

(57) **Zusammenfassung**

Eine erfindungsgemäße Vorrichtung zur Speicherung elektrischer Energie weist wenigstens eine galvanische Zelle auf. Diese ist wenigstens teilweise von einer Umhüllung umgeben. Weiter weist die Vorrichtung eine Zellhalteeinrichtung mit einem Innenraum auf. Die wenigstens eine galvanische Zelle ist in dem Innenraum angeordnet. Weiter weist die Zellhalteeinrichtung eine Wandung auf, welche diesen Innenraum wenigstens teilweise begrenzt. Die Wandung der Zellhalteeinrichtung und/oder die wenigstens eine galvanische Zelle weist dabei wenigstens einen Hohlraum auf. Der wenigstens eine Hohlraum ist wenigstens teilweise mit einem ersten Wärmeleitmittel gefüllt.

## Beschreibung

Die vorliegende Erfindung betrifft eine Vorrichtung zur Speicherung elektrischer Energie. Die Erfindung wird in Bezug auf eine wiederaufladbare Lithium-lonen-Batterie zur Versorgung eines Kraftfahrzeugsantriebs beschrieben. Es wird jedoch darauf hingewiesen, dass die Erfindung auch bei Batterien ohne Lithium bzw. auch unabhängig von Kraftfahrzeugen Anwendung finden kann.

Aus dem Stand der Technik sind Batterien mit galvanischen Zellen zur Speicherung elektrischer Energie bekannt. Dabei wird die einer wiederaufladbaren Batterie zugeführte elektrische Energie zunächst in chemische Energie gewandelt. Diese Wandlung ist verlustbehaftet. Während dieser Wandlung treten ferner unumkehrbare chemische Reaktionen auf, welche einer Alterung der wiederaufladbaren Batterie bewirken. Mit steigender Betriebstemperatur einer galvanischen Zelle ist neben schnellerer Wandlung der Energie aber auch die Alterung beschleunigt. Insbesondere während der Beschleunigung eines elektrisch angetriebenen Kraftfahrzeugs werden der wiederaufladbaren Batterie über kurze Zeiträume hohe elektrische Ströme entnommen. Diese hohen elektrischen Ströme treten auch auf, wenn die Verzögerung eines Kraftfahrzeugs von elektrischen Einrichtungen unterstützt und die gewonnene Energie der wiederaufladbaren Batterie zugeführt wird.

Dabei ist nachteilig, dass diese kurzzeitigen hohen Ströme eine Batterie vorzeitig altern lassen.

Der vorliegenden Erfindung liegt daher die Aufgabe zugrunde, die Lebensdauer derartiger Batterien zu erhöhen. Dies wird erfindungsgemäß durch den Gegenstand der unabhängigen Ansprüche erreicht. Vorteilhafte Ausführungsformen und Weiterbildungen sind Gegenstand der Unteransprüche.

Eine erfindungsgemäße Vorrichtung zur Speicherung elektrischer Energie weist wenigstens eine galvanische Zelle auf. Diese ist wenigstens teilweise von einer Umhüllung umgeben. Weiter weist die Vorrichtung eine Zellhalteeinrichtung mit einem Innenraum auf. Die wenigstens eine galvanische Zelle ist in dem Innenraum angeordnet. Weiter weist die Zellhalteeinrichtung eine Wandung auf, welche diesen Innenraum wenigstens teilweise begrenzt. Die Wandung der Zellhalteeinrichtung und/oder die wenigstens eine galvanische Zelle weist dabei wenigstens einen Hohlraum auf. Der wenigstens eine Hohlraum ist wenigstens teilweise mit einem ersten Wärmeleitmittel gefüllt.

Bei der Vorrichtung zur Speicherung elektrischer Energie mit wenigstens einer galvanischen Zelle handelt es sich um eine Primär- oder Sekundärbatterie. Diese stellt elektrische Energie nach Umwandlung aus chemischer Energie zur Verfügung. Sofern die Vorrichtung als Sekundärbatterie ausgebildet ist, ist sie auch geeignet, elektrische Energie aufzunehmen, in chemische Energie umzuwandeln und als chemische Energie abzuspeichern. Die Vorrichtung weist neben wenigstens einer galvanischen Zelle verschiedene weitere Einrichtungen für einen geordneten Betrieb auf und versorgt einen Kraftfahrzeugantrieb.

Die erfindungsgemäße Vorrichtung weist wenigstens eine galvanische Zelle auf. Vorzugsweise weist die Vorrichtung eine Vielzahl von galvanischen Zellen in Parallel- und/oder Reihenschaltung auf. So wird die elektrische Spannung und/oder die abspeicherbare Ladungsmenge erhöht. Vorzugsweise sind mehrere galvanische Zellen zur Erzielung einer vorgegebenen Betriebsspannung als Gruppe in Reihe geschaltet. Mehrere solcher Gruppen sind vorzugsweise parallel geschaltet und speichern so eine größere Ladungsmenge.

Eine galvanische Zelle ist wenigstens teilweise von einer Umhüllung umgeben. Die Umhüllung schützt die galvanische Zelle und deren Chemie vor schädigenden äußeren Einflüssen, beispielsweise gegen Wasserdampf aus der Umgebung. Die Umhüllung ist vorzugsweise durch einen gasdichten und elektrisch isolierenden Feststoff oder Schichtverbund gebildet, beispielsweise durch eine Folie. Vorzugsweise ist die Umhüllung dünnwandig und wärmeleitend ausgebildet. Die Umhüllung umschließt die galvanische Zelle vorzugsweise möglichst ohne Spalte oder Luftposter. So ist eine gute Wärmeleitung aus dem Zellinneren durch die Umhüllung möglich.

Die Vorrichtung weist eine Zellhalteeinrichtung auf. Die Zellhalteeinrichtung nimmt vorzugsweise zusätzlich zu den galvanischen Zellen weitere Einrichtungen auf, beispielsweise Messeinrichtungen, Steuereinrichtungen sowie andere zum Betrieb des Akkumulators erforderliche Einrichtungen oder Bauteile. Die Wandung gestattet auch die Verbindung und Befestigung mit dem Kraftfahrzeug. Die Wandung umschließt die aufgenommenen galvanischen Zellen vorzugsweise anliegend und ohne Luftpolster. So können die Umhüllungen der galvanischen Zellen bzw. die galvanischen Zellen mit dieser Wandung große Wärmeleistungen austauschen. Eine Wärmestrom kann in beide Richtungen übertragen werden.

Die Wandung und/oder die wenigstens eine galvanische Zelle weist wenigstens einen Hohlraum auf. Der wenigstens eine Hohlraum ist wenigstens teilweise von der Wandung und/oder der wenigstens einen galvanischen Zelle umschlossen. Der Hohlraum ist durch eine Hülle begrenzt, welche auch vorgesehen ist, mit der Wandung und/oder der wenigstens einen galvanischen Zelle Wärmeenergie auszutauschen. Sofern die Vorrichtung mehrere galvanische Zellen aufweist, verfügt jede dieser Zellen vorzugsweise über eigene Hohlräume. Mehrere vorhandene Hohlräume sind vorzugsweise untereinander verbunden, auch mit einem Hohlraum der Wandung.

Dieser wenigstens eine Hohlraum ist wenigstens teilweise mit einem ersten Wärmeleitmittel gefüllt. Das erste Wärmeleitmittel dient der Unterstützung des Wärmeaustauschs mit der Wandung und/oder der wenigstens einen galvanischen Zelle. Bevorzugt weist dieses erste Wärmeleitmittel eine höhere Wärmeleitfähigkeit auf, als ein Werkstoff der Wandung und/oder der wenigstens einen galvanischen Zelle. Für das erste Wärmeleitmittel kommen Reinstoffe oder Gemische, insbesondere eine Legierung oder eine Suspension in Frage.

Mit Verwendung wenigstens eines erfindungsgemäßen Hohlraums für eine Vorrichtung zur Speicherung elektrischer Energie kann Einfluss auf den Wärmehaushalt der Vorrichtung bzw. enthaltener galvanischer Zellen genommen werden. Vorzugsweise wird eine Vorrichtung zur Speicherung elektrischer Energie, welche wenigstens eine galvanische Zelle aufweist, innerhalb eines bestimmten Temperaturbereichs betrieben. Unterhalb einer Mindesttemperatur ist die Wandlung von chemischer Energie in elektrische Energie verlangsamt. Dabei ist die elektrische Leistungsfähigkeit einer solchen Vorrichtung begrenzt und ein geforderter elektrischer Strom kann dann von der Vorrichtung möglicherweise nicht geliefert werden. Je nach Einsatz der Vorrichtung, beispielsweise in einem Kraftfahrzeug in kalter Umgebung, ist es dienlich, die Vorrichtung bzw. die galvanischen Zellen zu erwärmen. Dazu trägt die Erfindung bei, indem sie die Zufuhr von Wärmeenergie in die Vorrichtung bzw. deren galvanische Zellen verbessert.

Oberhalb bestimmter Temperaturen kann die Lebensdauer der Vorrichtung bzw. deren galvanischer Zellen merklich verringert sein. Oberhalb bestimmter Temperaturen ist auch die Alterung einer galvanischen Zelle infolge unumkehrbarer chemischer Reaktionen beschleunigt. Die erfindungsgemäße Ausbildung einer Vorrichtung zur Speicherung elektrischer Energie kann diese Schädigung wenigstens verringern. Wärmeenergie kann schneller aus der Vorrichtung bzw. deren galvanischen Zellen abgeführt werden. Unumkehrbare chemische Reaktionen, die zur Alterung der Vorrichtung führen, werden verringert. So wird die zugrundeliegende Aufgabe gelöst.

Nachfolgend sind vorteilhafte Ausführungsformen und Weiterbildungen beschrieben.

Vorteilhaft ist zwischen der Wandung der Zellhalteeinrichtung und der wenigstens einen galvanischen Zelle ein zweites Wärmeleitmittel angeordnet. Dieses kann auch nur bereichsweise angeordnet sein, insbesondere dort, wo hohe Wärmeleistungen übertragen werden sollen. Das zweite Wärmeleitmittel steht dabei in engem stofflichen Kontakt sowohl mit den Teilen der Umhüllung einer galvanischen Zelle als auch mit Teilen der Wandung der Zelleinrichtung. Das zweite Wärmeleitmittel kann beispielsweise als eine wärmeleitfähige Paste ausgebildet sein. Diese Paste ist dann zwischen Umhüllung und Wandung als eine dünne Schicht aufgetragen. Das zweite Wärmeleitmittel kann auch als Folie oder zugeschnittene Matte ausgebildet sein. Das zweite Wärmeleitmittel wirkt beispielsweise derart, dass die für einen Wärmedurchgang verfügbare Fläche vergrößert wird. Auch kann das zweite Wärmeleitmittel zwischen zwei benachbarten galvanischen Zellen angeordnet sein. Mit Anordnung des zweiten Wärmeleitmittels wird vermieden, dass beispielsweise isolierende Luftpolster den Wärmeübergang hemmen.

Vorteilhaft ist das erste Wärmeleitmittel geeignet, unter bestimmten Bedingungen eine Phasenänderung zu durchlaufen. Während dieser Phasenänderung bleibt die Temperatur des ersten Wärmeleitmittels im Wesentlichen konstant. So kann das erste Wärmeleitmittel stabilisierend auf die Temperaturen der angrenzenden Körper wirken. Das erste Wärmeleitmittel kann so ausgewählt werden, dass die Temperatur einer Phasenänderung im Wesentlichen einer gewünschten Betriebstemperatur der Vorrichtung bzw. der galvanischen Zellen entspricht. Vorzugsweise ist das erste Wärmeleitmittel so ausgewählt, dass eine Phasenänderungstemperatur an die maximale zulässige Betriebstemperatur der Vorrichtung bzw. der galvanischen Zellen angepasst ist. Besonders bevorzugt entspricht die Phasenänderungstemperatur der maximalen Betriebstemperatur oder ist etwas geringer.

Vorteilhaft ist das erste Wärmeleitmittel wenigstens teilweise fließfähig. Vorzugsweise ist das erste Wärmeleitmittel innerhalb der erwünschten Betriebstemperaturen der Vorrichtung wenigstens teilweise flüssig. Das erste Wärmeleitmittel kann auch als Suspension ausgebildet sein, wobei auch dessen Feststoffe die Fähigkeit zur Phasenänderung im Bereich der Betriebstemperaturen der Vorrichtung aufweisen.
Ebenso vorteilhaft ist der wenigstens eine Hohlraum der Vorrichtung ausgebildet, den ersten Wärmeleitmittel zu führen. Dazu kann der Hohlraum im Wesentlichen rohrförmig mit einer beliebigen Gestalt des Querschnitts ausgebildet sein. Die Ausdehnungen eines Hohlraumquerschnitts sind an die Abmessungen einer galvanischen Zelle und/oder der Wandung der Zellhalteeinrichtung angepasst. Beispielsweise ist der Hohlraum als geschlossene Rohrleitung ausgebildet, welche sich auch aus der Vorrichtung erstrecken kann. Außerhalb der Vorrichtung kann dem Hohlraum Wärmeenergie zugeführt oder aus diesem abgeführt werden. Innerhalb dieser Rohrleitung kann es auch zu natürlicher Konvektion zur Beförderung des ersten Wärmeleitmittels kommen.

Vorteilhaft ist der wenigstens eine Hohlraum mit einem Behälter verbunden. Dieser Behälter kann als Vorratsbehälter und/oder als Ausdehnungsgefäß wirken. Diese Behälter sind zur Aufnahme wenigstens eines Teils des ersten Wärmeleitmittels vorgesehen. So kann der Grad der Füllung des Hohlraums mit dem ersten Wärmeleitmittel verändert und an die betrieblichen Bedingungen des Batteries angepasst werden. Vorzugsweise wird zur Verringerung eines Temperaturanstiegs innerhalb der Vorrichtung bzw. deren galvanischer Zellen zusätzlich erster Stoff in diesen wenigstens einen Hohlraum gegeben. So wird das Vermögen des ersten Wärmeleitmittels zur Aufnahme oder Abgabe von Wärmeenergie durch Phasenänderung an den jeweiligen Betriebszustand der Vorrichtung angepasst.

Vorteilhaft ist eine Fördereinrichtung zum Transport des ersten Wärmeleitmittels vorgesehen. Die Fördereinrichtung fördert das ersten Wärmeleitmittel durch den ersten Hohlraum und/oder tauscht einen Teil des ersten Wärmeleitmittels zwischen dem Behälter und dem wenigstens einen Hohlraum aus. Die Förderung erfolgt vorzugsweise bei Bedarf. Derart ausgestaltet kann die Betriebstemperatur der Vorrichtung über einen längeren Zeitraum stabilisiert werden, beispielsweise während einer Beschleunigungsphase eines angetriebenen Kraftfahrzeugs.

Vorteilhaft ist der Vorrichtung ein Wärmetauscher zugeordnet. Dieser Wärmetauscher ist vorzugsweise mit dem wenigstens einem Hohlraum verbunden. Dabei wird der Wärmetauscher von dem ersten Wärmeleitmittel durchströmt und/oder der Wärmetauscher tauscht Wärmeenergie mit diesem ersten Wärmeleitmittel aus. Der Wärmetauscher entnimmt die erforderliche Wärmeenergie zum Heizen des ersten Wärmeleitmittels beispielsweise der Umgebung oder einem Luftstrom. Auch kann der Wärmetauscher Wärmeenergie an eine beliebige Wärmekapazität abgeben. Vorzugsweise ist dieser Wärmetauscher elektrisch beheizt.

Vorteilhaft sind der Vorrichtung eine Steuereinrichtung, eine Schalteinrichtung und wenigstens eine erste Messeinrichtung zugeordnet. Wenigstens steuert die Steuereinrichtung die vorhandenen Messeinrichtungen und wertet deren Signale aus. Das geschieht auf Grundlage vorgegebener Rechenvorschriften. Die Rechenvorschriften berücksichtigen unterschiedliche Kennlinien einzelner Messmittel der ersten Messeinrichtung.
Wenigstens eine erste Messeinrichtung ist zur Feststellung der Temperatur an einer vorgegebenen Stelle einer galvanischen Zelle vorgesehen. Vorzugsweise sind mehrere Messmittel zur Erfassung von Temperaturen an verschiedenen Positionen einer oder mehrerer galvanischer Zellen mit einer ersten Messeinrichtung verbunden. Eine Messeinrichtung ist geeignet, jederzeit die Signale der Messmittel aufzunehmen. Aus praktischen Erwägungen und zur Verringerung der Datenmenge erfolgt die Erfassung vorzugsweise aber nur von Zeit zu Zeit. Vorzugsweise werden erfasste Daten von der ersten Messeinrichtung gefiltert bzw. verdichtet. Eine erste Messeinrichtung stellt der Steuereinrichtung wenigstens zeitweise Messwerte zur Verfügung. Vorzugsweise löst die Steuereinrichtung die Erfassung von Messwerten durch eine erste Messeinrichtung in Abhängigkeit von den Betriebsbedingungen der Vorrichtung bzw. der galvanischen Zellen aus. Vorzugsweise vergleicht die Steuereinrichtung einen Messwert einer ersten Messeinrichtung mit einem vorgegebenem Zielwert.
Der Zielwert kann in einer der Steuereinrichtung zugeordneten Speichereinheit abgespeichert sein. Vorliegend ist unter einem Zielwert ein geplanter Wert oder ein geplanter Verlauf eines Funktionsparameters zu verstehen.
Abhängig von dem Ergebnis dieses Vergleiches betätigt die Steuereinrichtung eine Schalteinrichtung. Vorliegend ist unter einer Schalteinrichtung auch eine Fördereinrichtung für ein Fluid, ein elektrisch schaltbares Ventil, ein elektrischer Schalter, ein elektronischer Schalter oder ein Proportionalregler zu verstehen. Den verschiedenen Ausbildungen der Schalteinrichtung ist gemein, dass sie Einfluss auf den Volumenstrom des ersten Wärmeleitmittels und/oder die Zu/Abfuhr von Wärmeenergie aus dem Batterie bzw. dessen galvanischen Zellen nehmen können. Bei Bedarf steuert die Steuereinrichtung weitere Baugruppen der Vorrichtung.

Vorteilhaft ist der Vorrichtung eine zweite Messeinrichtung zugeordnet. Die zweite Messeinrichtung dient vorzugsweise der Erfassung eines Drucks beispielsweise in dem wenigstens einen Hohlraum. Auch kann die zweite Messeinrichtung einen Druckunterschied erfassen, beispielsweise vor und nach einer Blende, welche in einem Strom des ersten Wärmeleitmittels angeordnet ist. Auch die Signale einer zweiten Messeinrichtung werden der Steuereinrichtung zur Verfügung gestellt und ggf. ausgewertet. Mit der Erfassung eines Drucks bzw. eines Druckunterschiedes können Erkenntnisse über das Verhalten des ersten Wärmeleitmittels gewonnen werden. Beispielsweise kann die fortschreitende Phasenänderung des ersten Wärmeleitmittels festgestellt werden.

Vorteilhaft ist die Steuereinrichtung der Vorrichtung mit einer übergeordneten Steuerung des Kraftfahrzeugsignals signalverbunden, beispielsweise über eine bestimmte Leitung. Von Zeit zu Zeit teilt die Steuereinrichtung der übergeordneten Steuerung beispielsweise Informationen betreffend Betriebszustände der Vorrichtung, Fortschrittsmeldungen zum Ablauf der Software der Steuereinrichtung und/oder insbesondere das Eintreten ungeplanter Vorfälle bzw. Zustände mit. Insbesondere ein Überschreiten der maximal zulässigen Betriebstemperatur der Vorrichtung wird der übergeordneten Steuerung des Kraftfahrzeugs mitgeteilt.

Vorteilhaft wird die erfindungsgemäße Vorrichtung derart betrieben, dass eine erste Messeinrichtung vorbestimmt oder auf Anforderung durch die Steuereinrichtung einen Messwert wenigstens einer galvanischen Zelle bzw. der Batterie erfasst. Dieser Messwert wird von der Steuereinrichtung mit einem vorgegebenen Zielwert verglichen.
Vorliegend ist unter einem Zielwert ein geplanter Wert oder ein geplanter Verlauf eines Funktionsparameters zu verstehen. Vorliegend ist unter einem Funktionsparameter ein Wert oder ein zeitlicher Verlauf einer physikalischen Größe zu verstehen, welche geeignet ist, Aufschluss über den Betriebszustand einer galvanischen Zelle bzw. der Vorrichtung zu geben. Beispielsweise sind dies das Speichervermögen einer galvanischen Zelle, die zwischen den beiden Polen einer galvanischen Zelle messbare elektrische Spannung, die Stärke eines zur Ladung oder zur Entladung führenden elektrischen Stroms, der Innenwiderstand einer galvanischen Zelle, die bereits geladene oder verfügbare elektrische Ladung der galvanischen Zelle, eventuelle Leckströme innerhalb der galvanischen Zelle oder auch die Temperatur der galvanischen Zelle. Je nach den Anforderungen an den Betrieb der Vorrichtung können auch andere physikalische Größen von Belang sein.
Sobald eine bedeutsame Abweichung des Messwerts von einem vorgegebenen Zielwert festgestellt wurde, betätigt die Steuereinrichtung eine Schalteinrichtung und/oder die Fördereinrichtung.

Auch kann der übergeordneten Steuerung das Vorliegen der Abweichung und/oder das Betätigen der Schalteinrichtung mitgeteilt werden. Dabei handelt es sich um vorgegebene Signale, deren Bedeutung der übergeordneten Steuerung bekannt sind.

Weitere Vorteile, Merkmale und Anwendungsmöglichkeiten der vorliegenden Erfindung ergeben sich aus der nachfolgenden Beschreibung im Zusammenhang mit den Figuren. Es zeigt:
Fig. 1 eine erfindungsgemäße Vorrichtung im Schnitt,
Fig.2 eine erfindungsgemäße Anordnung von Steuer- und Messeinrichtungen.

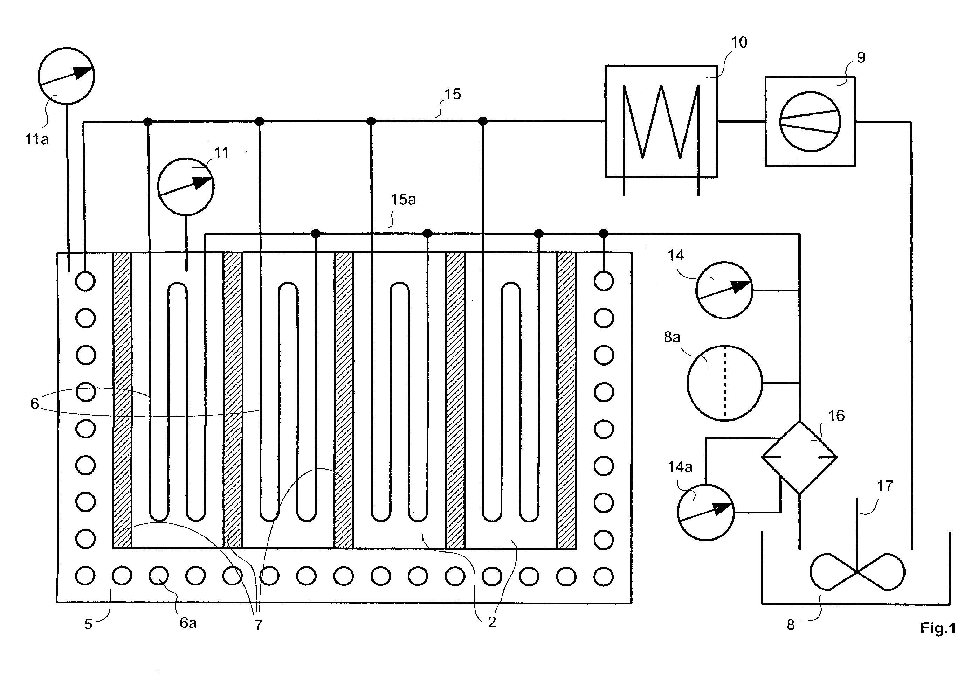

Figur 1 zeigt eine erfindungsgemäße Vorrichtung zur Speicherung elektrischer Energie in einer bevorzugten Ausführungsform. Die dargestellte Batterie weist vier galvanische Zellen 2 auf. Zwischen den galvanischen Zellen 2 sowie zwischen einer galvanischen Zelle 2 und der Wandung 5 der Zellhalteeinrichtung sind zweite Wärmeleitmittel 7 angeordnet. Bei den zweiten Wärmeleitmitteln 7 handelt es sich um wärmeleitfähige Paste, welche dünnwandig aufgetragen ist. Sowohl die galvanischen Zellen 2 als auch die Wandung 5 weisen Hohlräume 6, 6a auf, welche teilweise mit dem ersten Wärmeleitmittel gefüllt sind. Die Hohlräume sind untereinander verbunden und bilden eine Rohrleitung. Die Rohrleitung ist als Zuleitung 15 und Rücklauf 15a ausgebildet. Die Rohrleitung ist mit einem fließfähigen ersten Wärmeleitmittel gefüllt. Der Kreislauf des ersten Wärmeleitmittels beginnt am Vorratsbehälter 8. Die Pumpe 9 entnimmt dem Vorratsbehälter 8 das ersten Wärmeleitmittel und fördert es entlang der Rohrleitung 15 durch einen Wärmetauscher 10. Von der Rohrleitung 15 wird der Volumenstrom des ersten Wärmeleitmittels auf die galvanischen Zellen 2 sowie die Wandung 5 verteilt. Nach Verlassen der galvanischen Zellen 2 bzw. der Wandung 5 vereinigt die Rohrleitung 15a den Volumenstrom des ersten Wärmeleitmittels. Das erste Wärmeleitmittel passiert vor Erreichen des Vorratsbehälters 8 den Druckaufnehmer 14, den Expansionsbehälter 8a sowie die Drosselblende 16..

Das erste Wärmeleitmittel ist innerhalb der Betriebsbedingungen der Vorrichtung vorteilhaft als eine Suspension aus einer niedrigviskosen Flüssigkeit und darin fein verteilten Feststoffen ausgebildet. die Feststoffe sind so gewählt, dass sie bei der maximal zulässigen Betriebstemperatur des Batteries bzw. dessen galvanischer Zelle einen Phasenübergang durchlaufen. Im Vorratsbehälter 8 ist eine Rühreinrichtung 17 vorgesehen, welche die Suspension erhalten hilft.

Die ersten Messeinrichtungen 11, 11a dienen der Erfassung von Temperaturen der galvanischen Zellen 2 und der Wandung 5. Beispielhaft ist nur eine galvanische Zelle 2 mit einem Thermoelement 11 eingezeichnet. Die zweiten Messeinrichtungen 14, 14a dienen der Erfassung des absoluten Drucks der Rohrleitung 15a sowie des Druckverlustes an der Blende 16. Der Expansionsbehälter 8a dient zum Ausgleich des Volumenzuwachses, wenn die flüssige Phase des Prozessfluids teilweise verdampft. Es ist nicht erforderlich, dass die Vorrichtung einen Expansionsbehälter 8a aufweist.

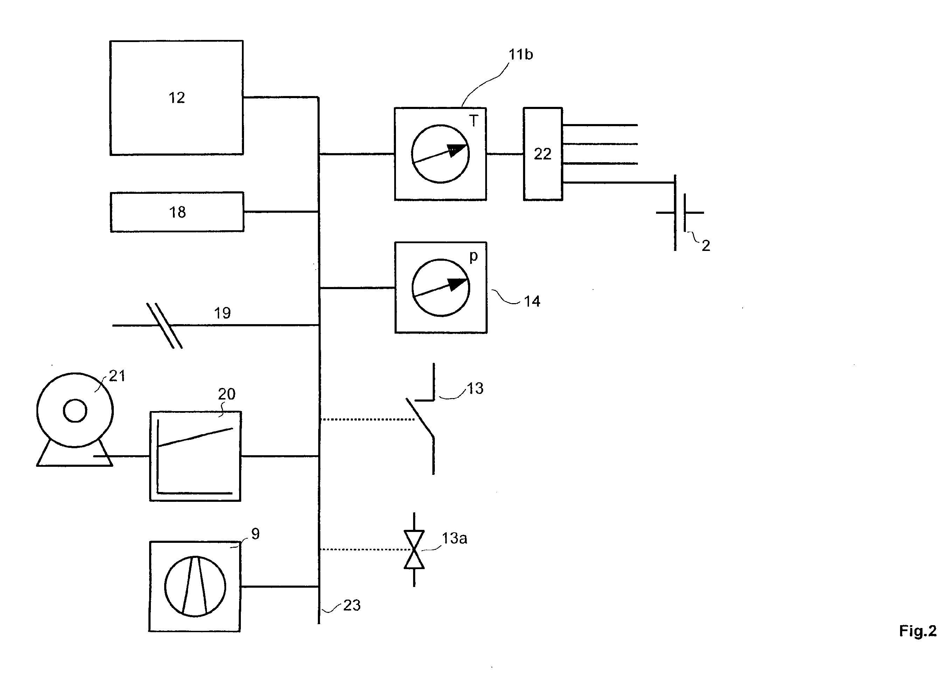

Figur 2 zeigt schematisch einige Vorrichtungen, die mit der Regelung der Temperatur des Batteries befasst sind sowie deren elektrische Verschaltung. An den Signalbus 23 sind die Steuereinrichtung12, eine Speichereinheit 18, eine erste Messeinrichtung 11 b zur Erfassung von Temperaturen, eine zweite Messeinrichtung 14 zur Erfassung von Druck bzw. Differenzdruck, zwei Schalteinrichtungen 13, 13a sowie eine Förderpumpe 9 angeschlossen. In diesem Ausführungsbeispiel ist an den Signalbus 23 zusätzlich die Signalleitung 19 zur Verbindung mit einer übergeordneten Steuerung sowie der Regler 20 zur Steuerung des Kfz-Antriebs angeschlossen. Die erste Messeinrichtung 11 b ist mit einer Schalteinheit 22 verbunden. An diese sind die verschiedenen Thermoelemente angeschlossen, welche auch die Temperatur wenigstens einer galvanischen Zelle 2 erfassen.

Die Vorrichtung wird so betrieben, dass die erste Messeinrichtung 11 b regelmäßig die Temperaturen der vorhandenen galvanischen Zellen 2 sowie der Wandung erfasst. Die Steuereinrichtung 12 vergleicht die gemessenen Temperaturen mit vorgegebenen Zielwerten, welche in der Speichereinheit 18 abgespeichert sind. Abhängig von den ermittelten Abweichungen schaltet die Steuereinrichtung 12 eine Schalteinrichtung 13, ein elektrische Ventil 13a oder die Förderpumpe 9 zur Beförderung des ersten Wärmeleitmitteles. Bei Bedarf kann über die Signalleitung 19 eine Meldung an die übergeordnete Steuerung abgesetzt werden.

## Patentansprüche

1. Vorrichtung zur Speicherung elektrischer Energie mit
wenigstens einer galvanischen Zelle (2), welche wenigstens teilweise von einer Umhüllung umgeben ist,
einer Zellhalteeinrichtung mit einem Innenraum (4) und einer Wandung (5), welche den Innenraum (4) wenigstens teilweise begrenzt, wobei die wenigstens eine galvanische Zelle (2) in dem Innenraum angeordnet ist,
**dadurch gekennzeichnet,**
**dass** die Wandung (5) und/oder die wenigstens eine galvanische Zelle (2) wenigstens einen Hohlraum (6, 6a) aufweist,
und **dass** dieser wenigstens eine Hohlraum (6, 6a) wenigstens teilweise mit einem ersten Wärmeleitmittel gefüllt ist.

2. Vorrichtung gemäß Anspruch 1, **dadurch gekennzeichnet, dass** zwischen der Wandung (5) und der galvanischen Zelle (2) wenigstens bereichsweise ein zweites Wärmeleitmittel (7) angeordnet ist.

3. Vorrichtung gemäß wenigstens einem der vorhergehenden Ansprüche, **dadurch gekennzeichnet, dass** das erste Wärmeleitmittel vorgesehen ist, wenigstens teilweise eine Phasenänderung zu durchlaufen,
und dass die Phasenänderung bei vorbestimmten Bedingungen erfolgt, welche an die Betriebsbedingungen der wenigstens einen galvanischen Zelle (2) angepasst sind.

4. Vorrichtung gemäß wenigstens einem der vorhergehenden Ansprüche, **dadurch gekennzeichnet, dass** das erste Wärmeleitmittel wenigstens teilweise fließfähig ist und dass der wenigstens eine Hohlraum (6, 6a) zur Führung des ersten Wärmeleitmittels ausgebildet ist.

5. Vorrichtung gemäß Anspruch 4, **dadurch gekennzeichnet, dass** der Vorrichtung wenigstens ein Behälter (8, 8a) zugeordnet ist, welcher mit dem wenigstens einen Hohlraum (6, 6a) verbunden ist.

6. Vorrichtung gemäß wenigstens einem der Ansprüche 4 oder 5, **dadurch gekennzeichnet, dass** der Vorrichtung 1 eine Fördereinrichtung (9) zugeordnet ist, welche zur Förderung des ersten Wärmeleitmittels vorgesehen ist.

7. Vorrichtung gemäß wenigstens einem der Ansprüche 4 bis 6, **dadurch gekennzeichnet, dass** der Vorrichtung (1) ein Wärmetauscher (10) zugeordnet ist, welcher für einen Austausch von Wärmeenergie zwischen dem ersten Wärmeleitmittel und einer Wärmekapazität vorgesehen ist.

8. Vorrichtung gemäß wenigstens einem der Ansprüche 5 bis 7, **dadurch gekennzeichnet, dass** der Vorrichtung wenigstens eine erste Messeinrichtung (11, 11a, 11b), eine Steuereinrichtung (12) und eine Schalteinrichtung (13, 13a) zugeordnet sind
und dass die Steuereinrichtung (12) vorgesehen ist, beispielsweise die Schalteinrichtung (13, 13a) zu betätigen.

9. Vorrichtung gemäß Anspruch 8, **dadurch gekennzeichnet, dass** der Vorrichtung (1) eine zweite Messeinrichtung (14) zugeordnet ist, welche vorzugsweise zur Erfassung eines Drucks oder eines Druckunterschieds vorgesehen ist.

10. Vorrichtung gemäß wenigstens einem der Ansprüche 8 oder 9, **dadurch gekennzeichnet, dass** die Steuereinrichtung (12) zum Signalaustausch mit einer übergeordneten Steuerung geeignet ist.

11. Verfahren zum Betrieb einer Vorrichtung gemäß wenigstens einem der Ansprüche 8 bis 10, **dadurch gekennzeichnet, dass** eine Messeinrichtung (11, 11 a, 11 b) einen Messwert erfasst und dass die Steuereinrichtung (12) abhängig von einer Abweichung des Messwerts von einem vorgegebenen Zielwert eine Schalteinrichtung (13, 13a) betätigt und/oder die Fördereinrichtung (9) schaltet.

12. Verfahren gemäß Anspruch 11 zum Betrieb einer Vorrichtung gemäß Anspruch 10, **dadurch gekennzeichnet, dass** die Steuereinrichtung (12) abhängig von einer Abweichung des Messwerts von einem vorgegebenen Zielwert einer übergeordneten Steuerung ein vorgegebenes Signal schickt.

## Geänderte Patentansprüche

### Geänderte Patentansprüche gemäss Regel 137(2) EPÜ.

**1.** Vorrichtung zur Speicherung elektrischer Energie mit
wenigstens einer galvanischen Zelle (2), welche wenigstens teilweise von einer Umhüllung umgeben ist,
einer Zellhalteeinrichtung mit einem Innenraum (4) und einer Wandung (5), welche den Innenraum (4) wenigstens teilweise begrenzt, wobei die wenigstens eine galvanische Zelle (2) in dem Innenraum angeordnet ist, und wobei die Wandung (5) und/oder die wenigstens eine galvanische Zelle (2) wenigstens einen Hohlraum (6, 6a) aufweist,
und dass dieser wenigstens eine Hohlraum (6, 6a) wenigstens teilweise mit einem ersten Wärmeleitmittel gefüllt ist,
**dadurch gekennzeichnet,**
**dass** zwischen der Wandung (5) und der galvanischen Zelle (2) wenigstens bereichsweise ein zweites Wärmeleitmittel (7) angeordnet ist.

**2.** Vorrichtung gemäß Anspruch 1, **dadurch gekennzeichnet, dass** das zweite Wärmeleitmittel in engem stofflichen Kontakt sowohl mit den Teilen der Umhüllung einer galvanischen Zelle als auch mit Teilen der Wandung der Zelleinrichtung steht.

**3.** Vorrichtung gemäß wenigstens einem der vorhergehenden Ansprüche, **dadurch gekennzeichnet, dass** das erste Wärmeleitmittel vorgesehen ist, wenigstens teilweise eine Phasenänderung zu durchlaufen,
und dass die Phasenänderung bei vorbestimmten Bedingungen erfolgt, welche an die Betriebsbedingungen der wenigstens einen galvanischen Zelle (2) angepasst sind.

**4.** Vorrichtung gemäß wenigstens einem der vorhergehenden Ansprüche, **dadurch gekennzeichnet, dass** das erste Wärmeleitmittel wenigstens teilweise fließfähig ist und dass der wenigstens eine Hohlraum (6, 6a) zur Führung des ersten Wärmeleitmittels ausgebildet ist.

**5.** Vorrichtung gemäß Anspruch 4, **dadurch gekennzeichnet, dass** der Vorrichtung wenigstens ein Behälter (8, 8a) zugeordnet ist, welcher mit dem wenigstens einen Hohlraum (6, 6a) verbunden ist.

**6.** Vorrichtung gemäß wenigstens einem der Ansprüche 4 oder 5, **dadurch gekennzeichnet, dass** der Vorrichtung 1 eine Fördereinrichtung (9) zugeordnet ist, welche zur Förderung des ersten Wärmeleitmittels vorgesehen ist.

**7.** Vorrichtung gemäß wenigstens einem der Ansprüche 4 bis 6, **dadurch gekennzeichnet, dass** die Vorrichtung (1) einen Wärmetauscher (10) aufweist, der von dem ersten Wärmeleitmittel durchströmt wird..

**8.** Vorrichtung gemäß wenigstens einem der Ansprüche 5 bis 7, **dadurch gekennzeichnet, dass** der Vorrichtung wenigstens eine erste Messeinrichtung (11, 11a, 11b), eine Steuereinrichtung (12) und eine Schalteinrichtung (13, 13a) zugeordnet sind
und dass die Steuereinrichtung (12) vorgesehen ist, beispielsweise die Schalteinrichtung (13, 13a) zu betätigen.

**9.** Vorrichtung gemäß Anspruch 8, **dadurch gekennzeichnet, dass** der Vorrichtung (1) eine zweite Messeinrichtung (14) zugeordnet ist, welche vorzugsweise zur Erfassung eines Drucks oder eines Druckunterschieds vorgesehen ist.

**10.** Vorrichtung gemäß wenigstens einem der Ansprüche 8 oder 9, **dadurch gekennzeichnet, dass** die Steuereinrichtung (12) zum Signalaustausch mit einer übergeordneten Steuerung geeignet ist.

**11.** Verfahren zum Betrieb einer Vorrichtung gemäß wenigstens einem der Ansprüche 8 bis 10, **dadurch gekennzeichnet, dass** eine Messeinrichtung (11, 11a, 11b) einen Messwert erfasst und dass die Steuereinrichtung (12) abhängig von einer Abweichung des Messwerts von einem vorgegebenen Zielwert eine Schalteinrichtung (13, 13a) betätigt und/oder die Fördereinrichtung (9) schaltet.

**12.** Verfahren gemäß Anspruch 11 zum Betrieb einer Vorrichtung gemäß Anspruch 10, **dadurch gekennzeichnet, dass** die Steuereinrichtung (12) abhängig von einer Abweichung des Messwerts von einem vorgegebenen Zielwert einer übergeordneten Steuerung ein vorgegebenes Signal schickt.
